Europäisches Patentamt

European Patent Office

Office européen des brevets

(19)

(11) Numéro de publication: **0 328 440**
**A1**

(12) **DEMANDE DE BREVET EUROPEEN**

(21) Numéro de dépôt: **89400299.7**

(22) Date de dépôt: **02.02.89**

(51) Int. Cl.⁴: **H 04 H 1/00**
**H 04 N 7/087**

(30) Priorité: **05.02.88 FR 8801364**

(43) Date de publication de la demande:
**16.08.89 Bulletin 89/33**

(84) Etats contractants désignés: **DE ES GB IT**

(71) Demandeur: **SGS-THOMSON MICROELECTRONICS S.A.**
**7, Avenue Galliéni**
**F-94250 Gentilly (FR)**

(72) Inventeur: **Brisson, Pierre**
**Cabinet Ballot-Schmit 84, Avenue Kléber**
**F-75116 Paris (FR)**

(74) Mandataire: **Ballot, Paul Denis Jacques et al**
**Cabinet Ballot-Schmit 84, avenue Kléber**
**F-75116 Paris (FR)**

(54) **Système de sélection pour la réception d'émissions radiodiffusées ou télédiffusées.**

(57) Système de sélection concernant les télécommunications, et en particulier la diffusion de programmes publics de radio et de télévision.

Pour faciliter la détermination du moment où commence une émission qui intéresse un utilisateur, soit parce qu'il veut la regarder soit parcequ'il veut l'enregistrer, le présent système propose d'émettre au début de chaque émission, et éventuellement aussi à la fin, un code d'identification de la chaîne qui émet le programme et du programme lui-même. L'utilisateur possède un appareil de réception (TVC) (téléviseur et/ou magnétoscope ou tuner)) qui peut être couplé à une carte à mémoire (CP). Dans la carte à mémoire, l'utilisateur enregistre les codes des émissions qui l'intéressent; lorsque ces codes sont émis, ils sont reconnus par l'appareil couplé à la carte et on commute automatiquement le téléviseur sur le canal correspondant au programme dont le code a été reconnu, et éventuellement on met en route un magnétoscope simultanément.

EP 0 328 440 A1

Description

**SYSTEME DE SELECTION POUR LA RECEPTION D'EMISSIONS RADIODIFFUSEES OU TELEDIFFUSEES**

L'invention concerne les télécommunications, et elle s'intéresse plus particulièrement mais non exclusivement aux émissions publiques de radio ou de télévision.

Compte tenu du grand nombre de programmes de radio et de télévision émis pour le public, l'auditeur ou le téléspectateur a souvent à changer de chaîne pour recevoir les émissions qui l'intéressent aux heures où elles sont émises. Il est intéressant pour lui de pouvoir connaître à l'avance la réception des émissions qui l'intéressent afin de pouvoir allumer son appareil de radio ou télévision au moment opportun, ou changer de chaîne au moment opportun. Pour cela, il dispose de programmes préétablis sous forme de journaux publiés par exemple hebdomadairement, de sorte qu'il connaît à l'avance les heures d'émission des programmes qui l'intéressent.

Par ailleurs, avec le développement des magnétoscopes, les spectateurs ont pris l'habitude d'enregistrer les émissions qui les intéressent même lorsqu'ils ne sont pas là pour les écouter. Dans ce cas, comme dans le cas de la réception directe de l'émission par le téléspectateur, l'utilisateur se fie aux horaires publiés dans les programmes prévus, et il règle le programmateur de son magnétoscope en fonction de ces horaires prévisionnels pour que le magnétoscope se mette en marche et enregistre les émissions désirées aux heures prévues et sur les chaînes prévues.

L'utilisateur est complètement dépendant de changements d'horaires par rapport aux prévisions, et un enregistrement sur magnétoscope peut devenir incomplet, voire même inutilisable s'il y a un retard ou une avance de quelques minutes par rapport à la programmation qui était prévue initialement et sur laquelle l'utilisateur s'est fondé pour établir un préréglage de son magnétoscope. S'il y a non seulement un retard ou une avance sur l'horaire mais même un changement de programme non annoncé, l'enregistrement effectué est inutilisable.

C'est pourquoi l'invention propose un système permettant d'éviter les insuffisances des systèmes actuels.

Selon l'invention, on propose un système de sélection automatique de programmes de radio ou de télévision, ce système comprenant :
- un moyen pour émettre au début de chaque programme un code reconnaissable, ce code étant spécifique d'une part de ce programme ou d'une catégorie de programmes à laquelle il appartient, et d'autre part de la fréquence porteuse sur laquelle ce programme est émis, de sorte que le code permet de définir exactement d'une part un canal de réception (correspondant par exemple à une fréquence porteuse bien déterminée) sur l'appareil de réception et d'autre part un programme bien identifié sur ce canal;
- une mémoire morte programmable électriquement,
- un moyen pour qu'un utilisateur puisse écrire dans la mémoire morte un ou plusieurs codes correspondant à des codes de programmes qu'il désire écouter ou enregistrer;
- un moyen pour recevoir les codes émis et pour les comparer aux codes enregistrés dans la mémoire morte programmable électriquement; - un moyen pour commander la commutation de l'appareil de réception en fonction du code reçu lorsque le moyen de comparaison indique qu'un code reçu est identique à un code enregistré dans la mémoire morte.

Le moyen de commande de commutation permettra la commutation de l'appareil de réception sur le canal correspondant au code ainsi reconnu, code dont on a dit qu'il était spécifique d'un canal d'émission.

De préférence, la mémoire morte est contenue dans une carte à puce transportable pouvant être introduite et retirée de l'appareil de réception d'émissions radiodiffusées ou télédiffusées.

Pour que le système fonctionne de la manière la plus commode possible, il faudra que la carte soit capable de recevoir les codes émis par les différents canaux d'émission pour lesquels l'utilisateur est susceptible d'avoir programmé un code. Cela veut dire en général que l'appareil dans lequel la carte sera insérée devra pouvoir recevoir simultanément plusieurs fréquences porteuses pour repérer les codes de début de programme émis sur ces fréquences. On peut limiter à un nombre prédéterminé ces fréquences porteuses; par exemple l'appareil de réception sera préréglé pour recevoir différentes fréquences porteuses pour les émissions, et l'appareil ou la carte sera conçu pour pouvoir recevoir simultanément ces différentes fréquences.

Le code de début de programme pourra si on le désire, pour faciliter la reconnaissance du code, être précédé par un drapeau indiquant que la suite est un code d'identification du programme. Dès réception de ce drapeau, l'appareil se met en alerte pour détecter la suite du code, donc l'identification de canal et de programme, et ces codes sont ensuite comparés aux codes enregistrés dans la carte.

Les détecteurs qui sont ainsi en alerte pour la surveillance de l'arrivée éventuelle d'un code peuvent faire partie de l'appareil de réception de l'utilisateur ou de la carte elle-même; il sera plus pratique le plus souvent de les incorporer à l'appareil de lecture plutôt qu'à la carte.

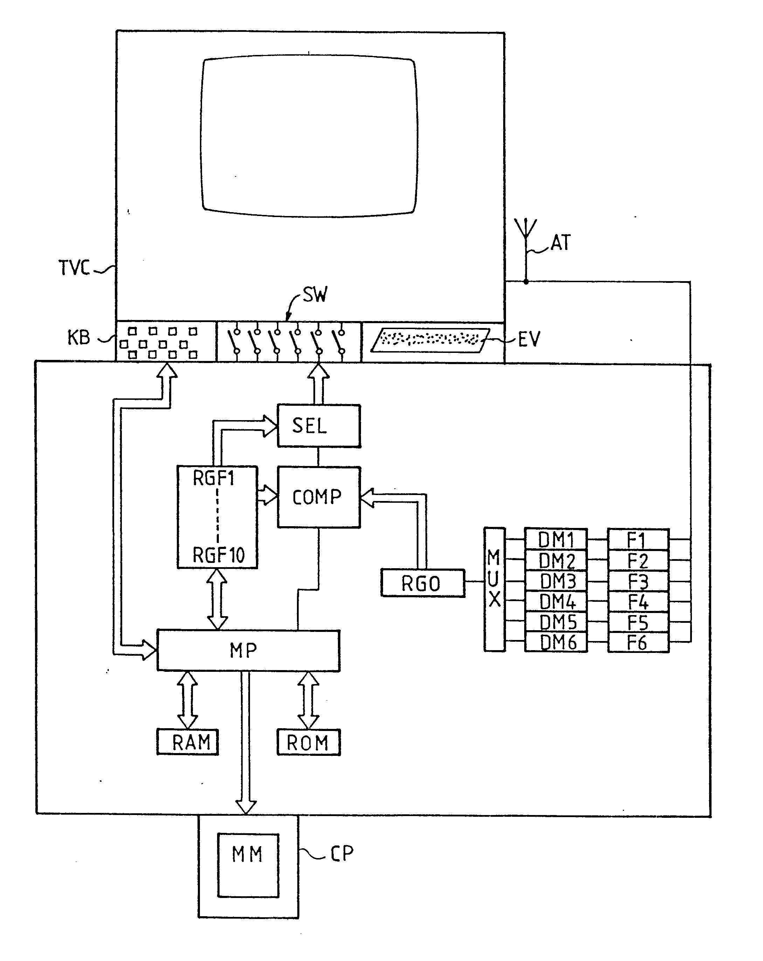

D'autres caractéristiques et avantages de l'invention apparaîtront à la lecture de la description détaillée qui suit et qui est faite en référence aux dessins annexés dans lesquels:
- la figure unique représente un schéma synoptique général d'un appareil de réception faisant partie du système incorporant l'invention.

Le système selon l'invention sera décrit à propos d'émissions de télévision; il serait bien entendu utilisable pour des émissions de radio ou une combinaison des deux, ou d'autres systèmes de transmission.

Les différentes chaînes d'émission de télévision émettent sur différentes fréquences porteuses correspondant à des canaux de réception différents. Pour décrire l'invention, on supposera par exemple qu'on est en présence des six chaînes de télévision émettant aujourd'hui sur le territoire français et dont les appellations courantes sont respectivement TF1, A2, FR3, Canal+, LA5, et M6 (marques déposées).

Chacune de ces chaînes émet donc sur un canal respectif et les programmes des chaînes sont indépendants les uns des autres.

Dans le système selon l'invention, chaque chaîne s'impose d'émettre sur sa fréquence de travail un code de début de programme juste avant chaque nouveau programme. Ce code est choisi soit indépendamment par les différentes sociétés de télédiffusion, soit en concertation entre ces sociétés pour qu'il n'y ait pas d'ambiguïté et qu'un même code ne recouvre pas deux programmes distincts. Par exemple, chaque code comprendra une première partie représentant l'identification de la chaîne qui émet, c'est-à-dire représentant une fréquence porteuse particulière donc un canal de réception bien identifiable. A supposer que le code corresponde à une signification en clair, on prévoirait par exemple que la première partie du code est TF1 pour la première chaîne, A2 pour la deuxième, FR3 pour la troisième, etc. Mais bien entendu le code peut n'avoir aucune signification en clair et peut correspondre à n'importe quelle suite de bits dans le cas général où le codage sera numérique.

Le code émis par la société de diffusion comprend ensuite une deuxième partie qui représente l'identification du programme qui va commencer au moment de l'émission du code. Le code indiquera par exemple si c'est le film du dimanche soir sur TF1 par exemple ou l'émission littéraire "Apostrophes" (marque déposée) sur A2, ou les actualités régionales sur FR3, etc. Le code pourra être unique pour désigner toutes les émissions d'"Apostrophes" puisqu'elles reviennent toutes les semaines; il désignera alors une catégorie de programmes; il pourra aussi être spécifique de chaque programme d'une même catégorie si on veut pouvoir distinguer chacun des programmes à l'intérieur de sa catégorie. Ainsi, en supposant que le code a une signification en clair, ce qui n'est pas du tout obligatoire, on peut concevoir par exemple que le code A2APOS est émis pour indiquer qu'une émission d'"Apostrophes" va débuter sur la deuxième chaîne et que les spectateurs intéressés doivent vite allumer leur téléviseur ou commuter sur cette chaîne; mais on peut aussi imaginer que le code émis est plutôt A2APOS03 pour indiquer que l'émission qui va démarrer sur la deuxième chaîne est la troisième émission d'"Apostrophes" de l'année en cours.

Dans une variante du système selon l'invention, au lieu que chaque chaîne émette le code d'identification de programme sur sa propre fréquence de travail, on peut prévoir que les codes sont centralisés et émis par une autorité centrale sur une fréquence spécifique; cela est possible en France où la télédiffusion est régie par une Haute Autorité et où les émissions des différentes chaînes de production se font par une société de diffusion unique.

Cette solution aurait l'avantage de simplifier la réalisation des appareils de réception.

Dans la suite on supposera que les codes sont émis par chaque chaîne de production sur sa fréquence de travail.

Le mode d'émission du code n'a pas besoin d'être précisé ici, il pourra être choisi parmi les nombreux modes connus. Par exemple on peut utiliser une modulation de fréquence d'une fréquence sous-porteuse de la manière suivante: le code est constitué d'une suite binaire de zéros et uns; le zéro peut représenter un premier écart de fréquence par rapport à la fréquence sous-porteuse et le un représenterait un deuxième écart, par exemple en sens inverse; dans la suite, on supposera pour simplifier que c'est ce mode de codage qui est utilisé, mais bien entendu d'autres systèmes plus compliqués ou plus simples peuvent être utilisés (modulations de largeurs d'impulsions, modulation NRZ, etc).

L'appareil de réception (téléviseur ou magnétoscope) est pourvu des éléments ordinaires nécessaires à la réception d'émissions de télévision. Ces circuits ne sont pas décrits car ils ne font pas l'objet de l'invention; ils sont désignés par la référence générale TVC.

L'appareil de réception comporte en outre selon l'invention un certain nombre de circuits destinés à la réception des codes d'identification de programmes, à la comparaison de ces codes avec des codes préenregistrés dans une mémoire morte électriquement programmable, et des moyens de commutation électroniques commandés par les moyens de comparaison et par les moyens de réception pour commuter d'un canal à un autre en fonction du code reçu lorsque le code correspond à un code préenregistré. L'appareil comporte en outre de préférence tous les moyens nécessaires à l'enregistrement de codes choisis dans la mémoire morte pour que l'utilisateur puisse procéder lui-même au choix et à l'enregistrement des codes.

Dans un exemple de réalisation, la mémoire morte MM est contenue dans une carte à puce CP de format classique pouvant être celui d'une carte de crédit (par exemple une surface de 10x7 centimètres carrés et une épaisseur de 2 millimètres); l'appareil de réception, téléviseur ou magnétoscope, comprendra une fente d'introduction de cartes et les moyens électromécaniques classiques nécessaires à l'établissement de contacts électriques entre la carte et l'appareil. Ces moyens sont connus et ne sont pas décrits ici.

Les moyens d'enregistrement de codes dans la carte comprendront, dans l'appareil de réception de l'utilisateur, d'abord un clavier à touches KB permettant d'introduire des codes soit sous forme numérique décimale, soit sous forme alphanumérique en particulier si on veut que les codes s'expriment sous forme assez claire pour l'utilisateur comme dans les exemples précédemment donnés; puis, un microprocesseur MP associé classiquement à des mémoires de programmes (ROM) et des mémoires de travail (RAM), la mémoire de programme comportant notamment un programme d'écriture de données (les données introduites sur le clavier) dans la mémoire électriquement programmable MM de la carte CP. Le microprocesseur MP peut être situé dans l'appareil de réception ou dans la carte elle-même; il sera généralement prévu dans l'appareil et la carte peut contenir un autre microprocesseur, notamment si elle doit assurer des fonctions particulières complexes. Le microprocesseur commandera non seulement la procédure d'écriture, mais également la fourniture de messages d'aide et de messages d'erreur destinés à l'utilisateur; ces messages peuvent apparaître par exemple sur un mini écran de visualisation à cristaux liquides, à plasma, ou à diodes électroluminescentes. Cet écran est désigné par la référence EV sur la figure.

Le microprocesseur aura par ailleurs une fonction de recherche et de comparaison entre les codes contenus dans la carte et les codes reçus par l'appareil de réception.

Dans un exemple de réalisation, l'appareil de réception comprendra six filtres accordés F1 à F6, calés chacun sur la fréquence porteuse correspondant aux six canaux que l'appareil de réception peut recevoir (le chiffre six est bien entendu pris à titre d'exemple).

Ces filtres fonctionneront en permanence et sont reliés à une antenne de réception générale AT classiquement prévue dans tout appareil de réception de télévision. Le rôle de ces filtres est de fournir un signal haute fréquence dans lequel on peut guetter l'émission d'un code d'identification de programmation sur un quelconque des six canaux, ceci alors qu'un seul canal est effectivement reçu et regardé ou enregistré par l'utilisateur.

Six démodulateurs de fréquence, DM1 à DM6, respectivement raccordés chacun à la sortie d'un filtre respectif et calés chacun sur la fréquence de sous-porteuse correspondant au codage de début de programme pour le canal considéré, sont prévus. A la sortie de ces démodulateurs on récupère soit une absence de signal utile si la sous-porteuse de codage de l'identification de programme n'est pas émise, soit un signal logique binaire au moment où la sous-porteuse est émise, c'est-à-dire juste avant le début d'un programme.

Les signaux logiques binaires doivent être détectés et reconnus. Les sorties binaires des démodulateurs de fréquence sont multiplexées, mises en forme et appliquées à l'entrée d'un registre RG0 de N bits, N étant la longueur du code attendu (par exemple 16 bits, voire 64 bits), ce registre ayant N sorties en parallèle, à partir desquelles on peut comparer en permanence le contenu du registre de N bits à celui de registres de référence RGF1 à RGF10 de même longueur contenant les codes préenregistrés dans la carte (codes qui ont été transférés par le microprocesseur dans les dits registres de référence au moment de la mise en route de l'appareil).

En cas de concidence entre un code du registre RG0 de N bits placé en sortie des démodulateurs et d'un code d'un registre de référence, un signal de détection de code est émis et le code ayant donné lieu à la détection est repéré (en pratique le registre de référence contenant ce code est repéré et on a donc accès au code reconnu bien que le code reçu soit passé de manière fugitive dans l'appareil de réception. Par sécurité on peut prévoir que le système d'émission du code émet le code plusieurs fois de suite avant que ne débute le programme.

Un champ de ce code, par exemple les 3 premiers bits, est destiné à l'identification du canal correspondant au code. Ce champ est appliqué, sous la commande des signaux de détection de concidence fournis par la comparaison des contenus des registres, à l'entrée d'un décodeur SEL dont les sorties permettent de commander un ensemble de commutateurs SW. Ces commutateurs sont les commutateurs de sélection de canal de l'appareil de réception; par conséquent, en cas de détection de l'émission d'un code de début de programme correspondant à un code enregistré dans la carte, on voit qu'on peut effectuer une commutation automatique de canal pour pouvoir instantanément regarder ou enregistrer le programme désiré. On peut prévoir que simultanément ou en fonction d'une instruction séparée, un magnétoscope se mette en route pour enregistrer le programme sur lequel le téléviseur vient de se commuter.

De préférence, on prévoira que l'utilisateur peut enregistrer dans la carte, associé à chaque code, une donnée (par exemple un groupe de deux ou quatre bits) représentant une priorité en cas de conflit. Il est possible en effet qu'une chaîne de télévision émette un signal de début de programme correspondant à un code enregistré dans la carte alors qu'une autre émission se déroule et que cette autre émission a elle-même été mise en route par détection d'un autre code également enregistré dans la carte. Il serait fâcheux que la première émission soit brutalement interrompue si elle est considérée par l'utilisateur comme plus importante que la deuxième. Réciproquement, si la deuxième émission est plus importante que la première, il faut effectuer la commutation et on ne pourrait donc pas se contenter simplement de mettre hors service le détecteur de codes tant qu'une émission déclenchée par la reconnaissance d'un code continue.

Si l'utilisateur a affecté un ordre de priorité entre les émissions, particulièrement pour celles dont il sait par les programmes publiés qu'elles risquent de se chevaucher dans le temps, on peut résoudre le problème de la manière suivante: lors de la détection d'un code de début de programme correspondant à un code préenregistré, la donnée de priorité correspondante (transmise par le microprocesseur et stockée dans un registre de priorité) est conservée dans un registre spécial. Si au cours du même programme un nouveau code de début de programme correspondant à un autre code préenregistré est détecté, la donnée de priorité correspondant au nouveau code est comparée à celle contenue dans le registre spécial; la commutation de canal est inhibée si la nouvelle priorité est d'ordre inférieur à l'ancienne, et tout se passe comme si on n'avait pas reçu le code (ou alternativement on stocke en mémoire la détection du nouveau code jusqu'à la fin du programme en cours de manière à redémarrer sur le programme de priorité inférieure). Si au contraire la nouvelle priorité est d'ordre supérieur à la précédente, on autorise la commutation de canal et on enregistre la nouvelle priorité dans le registre spécial. En cas de priorités identiques ou d'absence de spécification de priorité par l'utilisateur, on peut prévoir que la commutation a lieu ou au contraire qu'elle n'a pas lieu.

Il est souhaitable de prévoir que dans le système selon l'invention, non seulement des codes d'identification de programme sont émis avant le début de chaque nouveau programme, mais aussi des codes d'identification sont également émis juste après la fin de ces programmes. Cela faciliterait justement la gestion des priorités car un programme de priorité supérieure ne pourrait pas être remplacé par un programme de priorité inférieure tant que le code de fin du programme de priorité supérieure n'aurait pas été reçu. En outre cela offrirait des possibilités supplémentaires, comme par exemple l'élimination de ce qui est considéré comme une grande nuisance par beaucoup de possesseurs de téléviseurs et de magnétoscopes, à savoir la publicité au milieu des programmes.

En effet, si chaque fin de programme ou chaque fin de morceau de programme avant une page de publicité est indiquée par un code de fin de programme, l'utilisateur d'un magnétoscope pourrait utiliser ce code pour éliminer la page de publicité de son enregistrement en arrêtant son magnétoscope depuis la détection du code de fin de programme jusqu'à la détection d'un nouveau code de début de programme.

Bien entendu les codes de fin de programme peuvent être détectés exactement comme les codes de début de programme; ils comportent la même identification de canal et de programme que les codes de début, mais lorsqu'ils sont reconnus ils accomplissent des fonctions différentes qui peuvent être par exemple l'arrêt d'un magnétoscope, ou encore la remise à zéro du registre spécial de priorité, ou encore tout simplement la remise à zéro d'un drapeau (c'est-à-dire un bit de mémoire) qui avait été mis à un niveau logique haut au moment de la reconnaissance d'un code enregistré; dans ce dernier cas, le drapeau au niveau logique haut indique que si un programme donné est en cours c'est qu'il a été déclenché par la reconnaissance d'un code préenregistré et le drapeau au niveau logique bas indique au contraire que le programme en cours (si toutefois il y en a un) ne correspond pas à un programme qui a été déclenché par une reconnaissance de code spécifié.

## Revendications

1. Système de sélection automatique de programmes de radio ou de télévision, comprenant :
- un moyen pour émettre au début de chaque programme un code reconnaissable, ce code étant spécifique d'une part de ce programme ou d'une catégorie de programmes à laquelle il appartient, et d'autre part de la fréquence porteuse sur laquelle ce programme est émis, de sorte que le code permet de définir exactement d'une part un canal de réception (correspondant par exemple à une fréquence porteuse bien déterminée) sur l'appareil de réception et d'autre part un programme bien identifié sur ce canal;
- une mémoire morte (MM) programmable électriquement,
- un moyen (MP) pour qu'un utilisateur puisse écrire dans la mémoire morte un ou plusieurs codes correspondant à des codes de programmes qu'il désire écouter ou enregistrer;
- un moyen (F1 à F6, DM1 à DM6) pour recevoir les codes émis, un moyen pour les comparer aux codes enregistrés dans la mémoire morte programmable électriquement,
- un moyen (SEL, SW) pour commander la commutation de l'appareil de réception en fonction du code reçu lorsque le moyen de comparaison indique qu'un code reçu est identique à un code enregistré dans la mémoire morte,
caractérisé en ce que
- la mémoire morte est une carte à puce et en ce que le système comporte un lecteur entregistreur de cartes à puce.

2. Système selon la revendication 1, caractérisé en ce que les moyens de commande de commutation commandent le changement de canal de réception de l'appareil.

3. Système selon l'une des revendications 1 à 2, caractérisé en ce que les moyens de commande de commutation commandent en outre la mise en marche d'un magnétoscope.

4. Système selon l'une des revendications précédentes, caractérisé en ce que l'appareil de réception comporte des moyens pour recevoir simultanément plusieurs fréquences correspondant à plusieurs canaux de réception différents, et des moyens de démodulation propres à chacune des fréquences pour détecter l'émission d'un code de début de programme.

5. Système selon l'une des revendications précédentes, caractérisé en ce qu'il est prévu des moyens pour inscrire dans la mémoire morte une donnée de priorité relative des codes correspondant à différents programmes, et des moyens pour empêcher la commutation d'un programme à un autre si le programme en cours correspond à un code de priorité supérieur à un code qui vient d'être reçu.

6. Système selon l'une des revendications précédentes, caractérisé en ce qu'il comprend des moyens pour émettre un code de fin de programme et des moyens dans l'appareil de réception pour détecter ce code et commander une commutation à l'intérieur de l'appareil.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 046 967 (C. YARBROUGH) <br> * En entier * <br> --- | 1-3,6 | H 04 M 1/00 <br> H 04 N 7/087 |
| A | DE-A-2 614 188 (LICENTIA PATENT-VERWALTUNGS-GmbH) <br> * En entier * <br> --- | 1,2-4 | |
| A | US-A-4 499 601 (G. MATTHEWS) <br> * Colonne 2, ligne 26 - colonne 3, linge 49; colonne 6, lignes 15-43; revendications; colonne 5, lignes 13-29 * <br> --- | 1,2,5 | |
| A | EP-A-0 096 381 (INTERNATIONAL STANDARD ELECTRIC CORP.) <br> * Page 4, ligne 5 - page 10, ligne 19; figures * <br> --- | 1,2,4 | |
| A | DE-A-2 403 005 (HAUNI-WERKE KÖRBER & CO.) <br> * Revendications; page 5, ligne 1 - page 11, ligne 9; figures * <br> --- | 1,3,6 | DOMAINES TECHNIQUES RECHERCHES (Int. Cl.4) |
| A | EP-A-0 178 809 (J. WIEDEMER) <br> * Figure 1; page 6, ligne 20 - page 8, ligne 15; page 10, ligne 12 - page 11, ligne 21 * <br> ----- | 1 | H 04 H <br> H 04 N |

Le présent rapport a été établi pour toutes les revendications

| Lieu de la recherche | Date d'achèvement de la recherche | Examinateur |
|---|---|---|
| LA HAYE | 16-05-1989 | MINNOYE G.W. |

EPO FORM 1503 03.82 (P0402)